# EUROPEAN PATENT SPECIFICATION

(11) **EP 2 378 619 B1**
(45) Date of publication and mention of the grant of the patent: **14.11.2012**
(21) Application number: 11162497.9
(22) Date of filing: 14.04.2011
(51) Int. Cl.: H02G 3/04, H02G 3/32

(54) **Mesh tray cable duct system**
Gitterkabelrinnensystem
Système de chemins de câbles en treillis

(30) Priority: 15.04.2010 NL 2004560
(43) Date of publication of application: 19.10.2011
(73) Proprietor: Stago B.V., 1627 LB Hoorn (NL)
(72) Inventor: Schotanus, Maarten, 1616 BE Hoogkarspel (NL); Onstenk, Bouke, 1624 VL Hoorn (NL)
(74) Representative: Jansen, Cornelis Marinus

(56) References cited:
- EP-A2- 1 427 081
- FR-A1- 2 298 719

## Description

### Field of the invention

The invention relates to a cable duct system with a mesh tray that is connected to wall mounted supports and a method of connecting cable duct mesh trays to supports.

### Background

French patent application no 2716242 discloses cable duct system that comprises an elongated U-shaped mesh tray, i.e. a tray made of a network of connected rigid wires. L shaped supports attached to a wall are provided, the tray resting on the supports. The part of the L shaped supports that carries the tray has a U shaped profile in cross-section. To attach the tray to the support, an elastic attachment is provided that has a central part that fits in the profile of the support and end parts that hook around a wire of the tray on mutually opposite sides of the support. In this way, the tray is kept fixed, clamped against the support.

This solution forms an alternative to more conventional systems wherein the supports comprise slots into which the wires of the tray can be fixed. However, supports of specific design need be used. The elastic attachment of FR 2716242 needs to fit in the support it cannot be inserted, or at least it would risk to get rotated so that the clamping force becomes insufficient.

EP 1427081 discloses a wire mesh cable duct system comprising a mesh tray on a support. The support has the form of an inverted U-profile. A clamp clamps the mesh wire tray against the support. The clamp has a clamp wire that runs under the supporting surface of the support and loops around wires of the mesh on opposite sides of the support.

FR 2298719 discloses a hook for clamping vines to a line. The hook comprises a clamping wire that has opposite ends hooked around the line and a resilient part in between that clamps the vine against the line. The resilient part may be straight or have a bend, the parts of the clamping wire that run from the bend to the line crossing each other so that a V-shaped space arises for holding the vine.

### Summary

Among others, it is an object to provide for a mesh tray cable duct system with a clamp to clamp the mesh tray to a support, wherein the clamp makes it possible to use a wider range of different supports.

This object is achieved by a wire mesh cable duct system according to claim 1, by a wire mesh cable duct system clamp acording to claim 6 and by a method of connecting cable duct mesh trays to supports according to claim 9.

A wire mesh cable duct system is provided that comprises a mesh tray, a support and a clamp for clamping a mesh wire of the mesh tray against the support. The clamp comprises a clamp wire wound along a plurality of windings, with first and second ends of the clamp wire extending from the windings and coupled to the mesh wire on mutually opposite sides of the support, clamping the support between the windings and the mesh wire. The windings make it possible to use supports with legs with any thickness from a wide range of thicknesses and to clamp the mesh wire against the leg of the support. Moreover windings prevent the clamp from toppling, so that a consistent force can be ensure without relying on structures on the leg of the support.

In an embodiment the clamp wire comprises intermediate bends between the windings and the first and second ends respectively, bending the clamp wire towards the mesh wire. This makes it possible to couple the clamp wire to the mesh wire at an angle that is closer to the perpendicular. Thus a wider range of support thicknesses can be tolerated and a better grip on the mesh wire is possible.

In an embodiment the clamp wire is bent into hooks at its tips. This makes it easy to couple the clamp wire to a mesh wire. In a further embodiment the clamp wire extends further from one hook than from the other. This facilitates mounting.

### Brief description of the drawing

These and other objects and advantageous aspects will become apparent from a description of exemplary embodiments, using the following figures.

Figure 1a-c shows a mesh tray cable duct system

Figures 2-4 show embodiments of a clamp

### Detailed description of exemplary embodiments

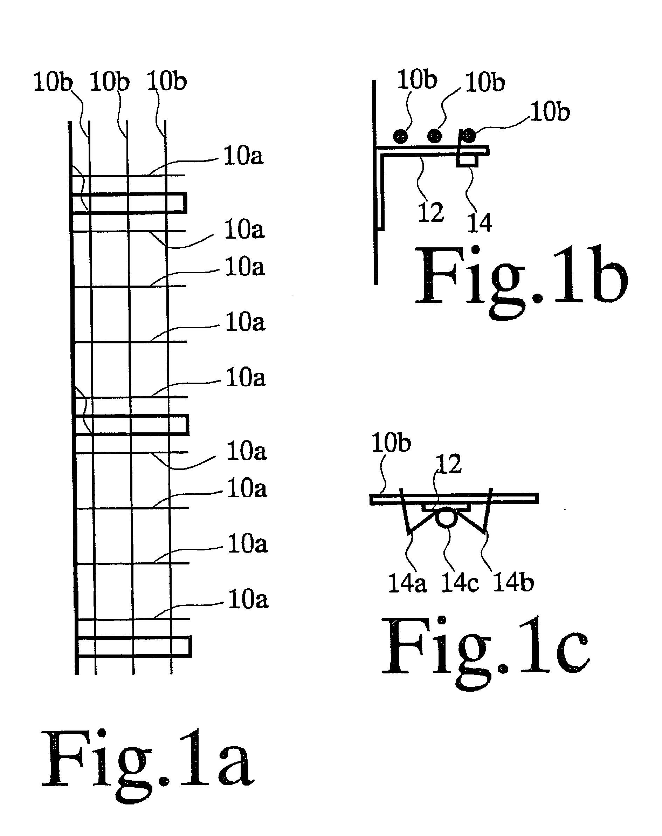

Figure 1a and b shows a mesh tray cable duct system seen from above and along the cable direction of the cable duct respectively. The system comprises a mesh tray 10a,b comprising first wires 10a bent in U-shapes transverse to the cable direction and second wires rigidly attached to the first wires and extending along the cable direction. Mesh tray 10a,b is supported on L shape supports 12, with a vertical leg of the L attached to a wall or other vertical structure and a horizontal leg supporting mesh tray 10a,b. Clamps 14 clamp second wires 10a against supports 12.

By way of example, only one clamp is shown, but it should be realized that more clamps may be used, for example for a plurality of wires of mesh tray 10a,b at the same support 12, and/or at a plurality of supports 12. With suitable supports, clamps 14 may also be used to attach first wires 10a to the support. Although an L shaped support attached to a vertical is shown, it should be appreciated that any type of support can be used, attached to any type of structure, such as the ceiling for example. A C shaped support, attached to the ceiling may be used for example, or a support suspended from an attachment structure. It suffices that the support 14 has a leg that extends to support mesh tray 10a,b and that has a width that is less than the extent of clamp 14. Preferably, this leg of support 12 supports the mesh tray from below, so that clamp 14 does not carry the weight of mesh tray 10a,b. But in addition or alternatively, clamps may be used to attach support 12 to mesh wires from the side of mesh tray 10a.b or from above the bottom of mesh tray 10a,b.

Figure 1c shows the mesh tray cable duct system in side view seen along the direction of the horizontal leg of support 12. A second wire 10b is shown resting on support 12. Clamp 14 has ends 14a,b with hooks hooked around second wire 10b on mutually opposite sides of support 12 and a plurality of windings 14c between hooked ends 14a,b, pressing against support 12.

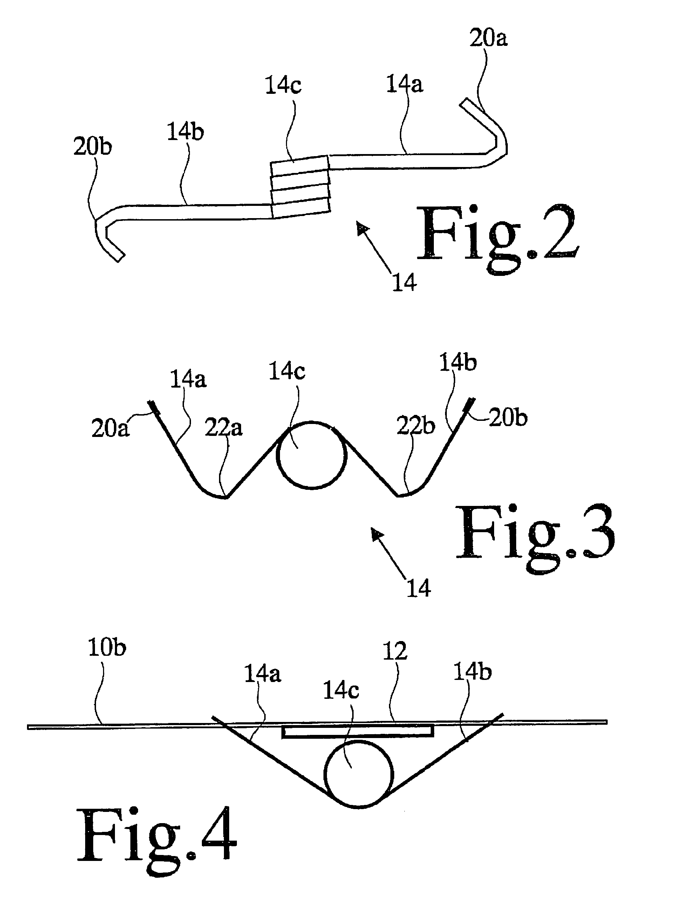

Figure 2 shows a clamp 14 in more detail, with resilient windings 14c running out into ends 14a,b with final bends 20a,b forming hooks at the tips of ends 14a,b. Resilient windings 14c form a coil of windings. In an embodiment three or four windings are used. Preferably at least two windings are used. Preferably, both ends 14a,b emerge from the windings 14c at substantially the same level: at the top level in the embodiment of the figure. Clamp 14 may be manufactured from a length of resiliently bendable metal wire for example, by plastically bending the metal wire on a bending machine to form windings 14c and the tips of the metal wire into final bends 20a,b. Windings 14c may be bent around a removable core. Alternatively, wire wound along a plurality of windings may be realized by casting in a mould for example. Resilient means that the material of the clamp exerts a force in a direction to return it to its force free shape: resiliently bendable means that the material of the clamp can be bent under force and that it exerts a counterforce in a direction to return it to its shape before bending. Plastic bending results in a permanent deformation without lasting counterforce from the material. Conditions to realize plastic bending are known per se.

In an embodiment spring steel wire of a thickness of 2.2 mm was used, using windings with a winding diameter of 16 mm and ends 14a,b of about 30 mm long. Different thicknesses or lengths, a different winding diameter and/or a different number of windings may be used, according to the desired forces. Preferably, a wire thickness is used the results in a force of at least 20 Newton on support 12. A suitable thickness may be selected simply by trying clamps made of wires of different standardly available wire thickness.

Figure 3 shows an embodiment of clamp 14 in side view in its free state, when no force is exerted on clamp 14. The clamp is made of resiliently bendable wire. As can be seen ends 14a,b comprise intermediate bends 22a,b in this state between the final bends 20a,b at tips of ends 14a,b and windings 14c. In the illustrated embodiment intermediate bends 22a,b are located midway between final bends 20a,b and windings 14c, or at least substantially midway (between 30-70% of the length). Intermediate bends 22a,b turn the wire towards the mesh wire (not shown) to which they are connected. In addition the ends 14a,b may emerge at an from windings 14c, directed away from the mesh wire (not shown). In the illustrated embodiment, intermediate bends 22a,b create an angle of ninety degrees or a smaller angle between different parts of ends 14a,b. The distance between a virtual line between the highest points on the inside of final bends 20a,b and the top of windings 14c is less than the sum of the thicknesses of second wire 10b and support 12. In an embodiment, this distance is 2 mm in the free state of the clamp 14 and second wire 10b and support 12 each have a thickness of at least 4 mm. Although simple bends are shown, it should be appreciated that instead windings may be used in intermediate bends 22a,b as well.

In use final bends 20a,b are hooked around second wire 10b on mutually opposite sides of support 12, so that windings 14c are forced against support 12. This force causes windings 14c to unwind fractionally, to a degree dependent on the thickness of support 12, maintaining a force against support 12. As will be appreciated, the use of a clamp of resiliently bendable wire with windings 14c makes it possible to clamp the mesh tray to supports with any one a wide range of thicknesses. Supports with thicknesses of 4-10 mm may be tolerated for example. Moreover windings 14c prevent clamp 14 from rotating around the cable direction (length direction of second wires 10b), thus ensuring that the clamping force is not significantly affected by such rotations.

Final bends 20a,b serve to hook ends 14a,b of clamp 14 around second wire 10b. Final bends 20a,b are bent through an angle of at least 120 degrees and preferably 145 degrees, with a bending radius corresponding to a maximum specified radius of second wires 10b of mesh tray 10a,b. Thus, clamp 14 can be attached to second wires 10 with this radius or with a smaller radius. Preferably final bends 20a,b of first and second end 14a,b bend in mutually opposite directions seen along the axis around which windings 14c are wound. This improves stability of the attachment. In the illustrated embodiment, the final bends 20a,b on each end 14a,b bend away from the side of windings 14c at which the end is located. In this way the axis around which windings 14c are wound may be clamped at a non- perpendicular angle to the mesh wire 10b to which clamp 10 is attached, or the ends 14a,b will be forced to bend towards the middle of windings 14c. This may improve clamping. Instead of hooks in the form of final bends 20a,b other forms of coupling to mesh wires may be used, for example using screws, or other intermediate coupling elements attached to eyes at the ends of the clamp wire. However, hooks provide for a simple and reliable coupling mechanism.

In the illustrated embodiment the first end 14a of the clamp extends further beyond the end of final bend 20a than the second end 14b beyond its final bend 20b. The clamp wire at the first end 14a is longer by at least twice the diameter of the clamp wire for example. This facilitates mounting, the end 14a with the longest extent being used to guide attachment of the clamp at that end to second wire 10b at one end first. In this case the less extending second end 14b can be forced over the second wire with little difficulty.

Figure 4 shows an alternative embodiment of clamp 14 without intermediate bends. As in the embodiments of the previous figures, this clamp makes it possible to clamp supports 12 with a wide range of thicknesses against second wire 10b. Additional intermediate bends may be used in this clamp as well. Intermediate bends 22a,b have the advantage that it is possible to keep the ends 14a,b of clamp 14 free from support 12 for supports 12 with a wider range of support widths. Moreover, use of a bend angle for intermediate bends 22a,b of approximately ninety degrees (e.g. between 60-120 degrees) has the advantage that clamp 14 hooks more perpendicularly onto second wire 10b, reducing stress within clamp 14. Furthermore, operational forces are directed at smaller angles to the wire, which minimizes dependence on wire bending stiffness.

## Claims

1. A wire mesh cable duct system, comprising a mesh tray (10a, b), a support (12) and a clamp (14) for clamping a mesh wire (10b) of the mesh tray (10a,b) against the support (12), **characterized in that** the clamp (14) comprises a clamp wire (14) wound along a plurality of windings (14c), with first and second ends (14a,b) of the clamp wire (14) extending from the windings (14c) and coupled to the mesh wire (10b) on mutually opposite sides of the support (12), clamping the support (12) between the windings (14c) and the mesh wire (10b).

2. A wire mesh cable duct system according to claim 1, wherein the clamp wire comprises a first and second intermediate bends (22a,b) in the first and second ends (14a,b) respectively, between the windings (14c) and the mesh wire (10b), bending the first and second ends (14a,b) towards the mesh wire (10b).

3. A wire mesh cable duct system according to claim 2, wherein the first and second ends (14a,b) are directed away from the support (12) between the windings (14c) and the first and second intermediate bends (22a,b).

4. A wire mesh cable duct system according to any one of the preceding claims, wherein the clamp wire is bent into hooks (20a,b)at tips of the first and second ends (14a,b), for hooking to the mesh wire (10b).

5. A wire mesh cable duct system according to claim 4, wherein an extent of the clamp wire from the hook (20a,b) towards the tip of the clamp wire is larger in the first end (14a) than in the second end (14b).

6. A wire mesh cable duct system clamp, the clamp comprising a clamp wire, with first and second ends (14a,b) of the clamp wire and hooks (20a,b) on the first and second ends (14a,b) for hooking to a mesh wire (10b), **characterized in that** the clamp wire is wound along a plurality of windings (14c), the first and second ends (14a,b) extending from the windings (14c).

7. A wire mesh cable duct system clamp according to claim 6, wherein the clamp wire comprises first and second intermediate bends (22a,b) between the windings (14c) and tips of the first and second ends (14a,b) respectively, bending the clamp wire in a W-shape with the intermediate bends (22a,b) at the lower points of the W and the windings (14c) at the middle high point of the W.

8. A wire mesh cable duct system clamp according to claim 6 or 7, wherein an extent of the clamp wire from the hook (20a,b) towards the tip of the clamp wire is larger in the first end (14a) than in the second end (14b).

9. A method of clamping a mesh tray (10a,b) of a wire mesh cable duct system against a support (12) with a clamp (14) comprising a clamp wire, the method comprising coupling first and second ends (14a,b) of the clamp wire to a mesh wire (10b) on mutually opposite sides of the support (12), exerting a force on the support (12) towards the mesh wire 10(b), **characterized in that** a clamp is used wherein the clamp wire is wound along a plurality of windings (14c), with the first and second ends (14a,b) of the clamp wire extending from the windings (14c) the force on the support (12) towards the mesh wire (10b) being exerted by means of the windings (14c).

## Patentansprüche

1. Gitterkabelrinnensystem, umfassend eine Gitterrinne (10a,b), eine Stütze (12) und eine Klemme (14) zum Klemmen eines Drahtgitters (10b) der Gitterrinne (10a,b) gegen die Stütze (12), **dadurch gekennzeichnet, dass** die Klemme (14) einen Klemmdraht (14) umfasst, der entlang mehrerer Wicklungen (14c) gewickelt ist, wobei die ersten und zweiten Enden (14a,b) des Klemmdrahts (14) sich von den Wicklungen (14c) aus und gekoppelt an das Drahtgitter (10b) auf entgegengesetzten Seiten der Stütze (12) erstrecken und die Stütze (12) zwischen den Wicklungen (14c) und dem Drahtgitter (10b) einklemmen.

2. Gitterkabelrinnensystem nach Anspruch 1, wobei der Klemmdraht erste und zweite Zwischenbiegungen (22a) in den ersten bzw. zweiten Enden (14a,b) zwischen den Wicklungen (14c) und dem Drahtgitter (10b) umfasst, welche die ersten und zweiten Enden (14a,b) zum Drahtgitter hin biegen.

3. Gitterkabelrinnensystem nach Anspruch 2, wobei die ersten und zweiten Enden (14a, b) zwischen den Wicklungen (14c) und den ersten und zweiten Zwischenbiegungen (22a,b) von der Stütze (12) weg gerichtet sind.

4. Gitterkabelrinnensystem nach einem der vorhergehenden Ansprüche, wobei der Klemmdraht an den Spitzen der ersten und zweiten Enden (14a,b) zu Haken (20a,b) gebogen ist, um in das Drahtgitter (10b) einzuhaken.

5. Gitterkabelrinnensystem nach Anspruch 4, wobei eine Verlängerung des Klemmdrahts vom Haken (20a,b) zur Spitze des Klemmdrahts hin im ersten Ende (14a) größer ist als im zweiten Ende (14b).

6. Gitterkabelrinnensystemklemme, wobei die Klemme einen Klemmdraht mit ersten und zweiten Enden (14a,b) des Klemmdrahts und Haken (20a,b) an den ersten und zweiten Enden (14a,b) zum Einhaken in ein Drahtgitter (10b) umfasst, **dadurch gekennzeichnet, dass** der Klemmdraht entlang mehrerer Windungen (14c) gewickelt ist, wobei die ersten und zweiten Enden (14a,b) sich von den Wicklungen (14c) aus erstrecken.

7. Gitterkabelrinnensystemklemme nach Anspruch 6, wobei der Klemmdraht erste und zweite Zwischenbiegungen (22a,b) zwischen den Wicklungen (14c) umfasst und Spitzen der ersten bzw. zweiten Enden (14a,b), die den Klemmdraht in eine W-Form biegen, mit Zwischenbiegungen (22a,b) an den unteren Punkten des W und den Wicklungen (14c) am mittelhohen Punkt des W.

8. Gitterkabelrinnensystemklemme nach Anspruch 6 oder 7, wobei eine Erstreckung des Klemmdrahts von dem Haken (20a,b) zur Spitze des Klemmdrahts hin im ersten Ende (14a) größer ist als im zweiten Ende (14b).

9. Verfahren zum Klemmen eines Gitterschachts (10a,b) eines Gitterkabelrinnensystems gegen eine Stütze (12) mit einer Klemme (14), umfassend einen Klemmdraht, wobei das Verfahren das Koppeln der ersten und zweiten Enden (14a,b) des Klemmdrahts an ein Drahtgitter (10b auf einander gegenüber liegenden Seiten der Stütze (12), das Ausüben einer Kraft auf die Stütze (12) zum Drahtgitter (10b) hin umfasst, **dadurch gekennzeichnet, dass** eine Klemme verwendet wird, wobei der Klemmdraht entlang mehrerer Wicklungen (14c) gewickelt ist und die ersten und zweiten Enden (14a,b) des Klemmdrahts sich von den Wicklungen (14c) aus erstrecken, wobei die Kraft auf die Stütze (12) zum Drahtgitter (10b) hin mithilfe der Wicklungen (14c) ausgeübt wird.

## Revendications

1. Système de chemins de câbles en treillis, comprenant un plateau métallique (10a, b), un support (12) et une attache (14) pour serrer un fil de treillis (10b) du plateau métallique (10a, b) contre le support (12), **caractérisé en ce que** l'attache (14) comprend un fil d'attache (14) enroulé le long d'une pluralité d'enroulements (14c), avec des première et seconde extrémités (14a, b) du fil d'attache (14) qui s'étendent à partir des enroulements (14c) et couplées au fil de treillis (10b) sur des côtés mutuellement opposés du support (12), serrant le support (12) entre les enroulements (14c) et le fil de treillis (10b).

2. Système de chemins de câbles en treillis selon la revendication 1, dans lequel le fil d'attache comprend des premier et second coudes intermédiaires (22a, b) dans les première et seconde extrémités (14a, b) respectivement, entre les enroulements (14c) et le fil de treillis (10b), fléchissant les première et seconde extrémités (14a, b) vers le fil de treillis (10b).

3. Système de chemins de câbles en treillis selon la revendication 2, dans lequel les première et seconde extrémités (14a, b) s'éloignent du support (12) entre les enroulements (14c) et les premier et second coudes intermédiaires (22a, b).

4. Système de chemins de câbles en treillis selon l'une quelconque des revendications précédentes, dans lequel le fil d'attache est plié en crochets (20a, b) au niveau des pointes des première et seconde extrémités (14a, b) pour s'accrocher au fil de treillis (10b).

5. Système de chemins de câbles en treillis selon la revendication 4, dans lequel une étendue du fil d'attache allant du crochet (20a, b) vers la pointe du fil d'attache est plus importante dans la première extrémité (14a) que dans la seconde extrémité (14b).

6. Attache de système de chemins de câbles en treillis, l'attache comprenant un fil d'attache, avec les première et seconde extrémités (14a, b) du fil d'attache et des crochets (20a, b) sur les première et seconde extrémités (14a, b) pour s'accrocher à un fil de treillis (10b), **caractérisée en ce que** le fil d'attache est enroulé le long d'une pluralité d'enroulements (14c), les première et seconde extrémités (14a, b) s'étendant à partir des enroulements (14c).

7. Attache de système de chemins de câbles en treillis selon la revendication 6, dans laquelle le fil d'attache comprend des premier et second coudes intermédiaires (22a, b) entre les enroulements (14c) et les pointes des première et seconde extrémités (14a, b) respectivement, coudant le fil d'attache selon une forme W avec les coudes intermédiaires (22a, b) au point le plus bas du W et les enroulements (14c) au point central haut du W.

8. Attache de système de chemins de câbles en treillis selon la revendication 6 ou 7, dans laquelle une étendue du fil d'attache allant du crochet (20a, b) vers la pointe du fil d'attache, est plus importante dans la première extrémité (14a) que dans la seconde extrémité (14b).

9. Procédé pour attacher un plateau métallique (10a, b) d'un système de chemins de câbles en treillis contre un support (12) avec une attache (14) comprenant un fil d'attache, le procédé comprenant les étapes consistant à coupler les première et seconde extrémités (14a, b) d'un fil d'attache à un fil de treillis (10b) sur des côtés mutuellement opposés du support (12), exercer une force sur le support (12) vers le fil de treillis (10b), **caractérisé en ce qu'**une attache est utilisée, dans lequel le fil d'attache est enroulé le long d'une pluralité d'enroulements (14c), avec les première et seconde extrémités (14a, b) du fil d'attache qui s'étendent à partir des enroulements (14c), la force sur le support (12) vers le fil de treillis (10b) étant exercée au moyen des enroulements (14c).
